# EUROPÄISCHE PATENTANMELDUNG

(11) **EP 3 228 912 A1**
(43) Veröffentlichungstag der Anmeldung: **11.10.2017**
(21) Anmeldenummer: 17000581.3
(22) Anmeldetag: 06.04.2017
(51) Int. Cl.: F16K 15/03, A62C 3/04, A62C 4/04, F16K 17/00, F16K 17/36

(54) **DRUCKENTLASTUNGSVORRICHTUNG ZUR EXPLOSIONSMÄSSIGEN ENTKOPPLUNG ZWEIER ANLAGENTEILE**

(30) Priorität: 06.04.2016 DE 102016003941; 07.07.2016 DE 102016008204
(71) Anmelder: Reitinger, Peter, 91282 Betzenstein (DE)
(72) Erfinder: Reitinger, Peter, 91282 Betzenstein (DE)
(74) Vertreter: Völger, Karl Wolfgang

(57) **Zusammenfassung**

Die Erfindung betrifft eine Explosionsschutzvorrichtung zur explosionsmäßigen Entkopplung zweier Anlagenteile, die mittels einer Rohrleitung miteinander verbunden sind, in der explosive Stäube oder Gase in einer Strömungsrichtung (10) gefördert werden, wobei innerhalb der Rohrleitung ein Rohrköper (1) angeordnet ist, wobei der Rohrkörper (1) eine Einlassöffnung (2) und eine axial beabstandete Auslassöffnung (3) mit mindestens einem dazwischen angeordneten Schließorgan (4, 5) enthält. Die Erfindung ist dadurch gekennzeichnet, dass zwischen der Einlassöffnung (2) und der Auslassöffnung (3) mindestens zwei axial beabstandete unterschiedlich ausgebildete Schließorgane (4, 5) vorgesehen und diese abwechselnd nacheinander im Rohrkörper (1) angeordnet sind, wobei jedes Schließorgan (4, 5) zwei schräg in den Rohrkörper (1) ragende Biegeplatten (6) enthält, die in Strömungsrichtung (10) den Durchströmquerschnitt (8) zunehmend verengen, wobei ein radiales Schließorgan (5) zwei Biegeplatten (6) an gegenüberliegenden Innenwänden (13) des Rohrkörpers (1) enthält und ein zentrales Schließorgan (4) zwei im Zentrum (9) des Rohrkörpers (1) angeordnete und v-förmig miteinander verbundene Biegeplatten (6) enthält, wobei die Biegeplatten (6) so elastisch oder plastisch verbiegbar sind, dass diese bei einem Explosionsdruck den Durchströmquerschnitt (8) des Rohrkörpers (1) in Gegenrichtung zur Strömungsrichtung (10) verschließen.

## Beschreibung

Die Erfindung betrifft eine Druckentlastungsvorrichtung zur explosionsmäßigen Entkopplung zweier Anlagenteile, gemäß dem Oberbegriff des Patentanspruchs 1.

In industriellen und gewerblichen Anlagen werden häufig staubbeladene Materialien mittels Rohrleitungen von einem Anlagenteil zu einem nachfolgenden Anlagenteil befördert. Dazu werden auch häufig pneumatische Fördersysteme verwendet, in denen sich leicht explosive Luft- und Partikelverteilungen einstellen, die in den Anlagenteilen oder den Rohrleitungen zu Explosionen führen können. Zur Druckentlastung werden dazu Explosionsschutzklappen oder Berstscheiben vorgesehen, die zwar den Explosionsdruck nach außen zur Atmosphäre lenken, aber ein Ausbreiten der Explosion innerhalb der Anlage nicht immer verhindern können. Deshalb werden in diesen explosionsgefährdeten pneumatischen Anlagen häufig Explosionsschutzvorrichtungen eingesetzt, die die Explosionsausbreitung verhindern sollen.

Eine derartige Vorrichtung zur explosionstechnischen Entkopplung zweiter Anlagenteile in einer Entstaubungsanlage ist aus der DE 10 2007 010 060 B3 vorbekannt. Dabei werden die explosionsfähigen Stäube in einem Luftstrom von einer Erfassungsstelle mittels einer Rohrleitung einem Abscheider zugeführt, der eine Berstscheibe zur Druckentlastung enthält. Zur Verhinderung einer Ausbreitung einer Explosion im Abscheider in Richtung der Erfassungsstelle ist im Rohrsystem zwischen diesen beiden Anlagenteilen eine Rückschlagklappe zur explosionstechnischen Entkopplung angebracht, die bei einem explosionsbedingten Überdruck im Abscheider selbsttätig die Rohrleitung in Richtung der Erfassungsstelle schließt. Dazu ist im verbindenden Rohrsystem ein Rohrkörper eingebaut, der ein Gehäuse enthält, dessen Querschnitt größer als der Rohrdurchmesser ist. In diesem Rohrkörper ist ein kreisrunder Rohrstutzen mit einem Anschlag eingeführt, der von einer Rückschlagklappe verschließbar ist. Diese Rückschlagklappe ist oberhalb des Rohrstutzens gelenkig gelagert, so dass diese im normalen Förderbetrieb von dem durchströmenden pneumatischen Luftstrom nach oben verschwenkt wird und damit geöffnet ist. Führt nun eine Explosion im Abscheider zu einer Druckerhöhung, die größer als der Durchströmdruck ist, wird die Rückschlagklappe nach unten verschwenkt und liegt dann auf dem Anschlag des Rohrstutzens an und verschließt diesen zum Abscheider. Da die Abdichtung der Rückschlagklappe an dem Anschlag des Rohrstutzens im Laufe des Betriebes durch Anhaftungen oder Materialabtrag sich verschlechtern kann, sind im Rohrkörper noch ein Verschleiß- und ein Positionssensor angebracht, die die ordnungsgemäße Funktion der Explosionsschutzvorrichtung überwachen. Allerdings kann es bei sehr raschen Explosionswirkungen vorkommen, dass die Rückschlagklappe durch den sehr plötzlich auftretenden Gegendruck unter dem Klappenkörper noch weiter geöffnet wird, so dass die Schwerkraftwirkung der Rückschlagklappe diese nicht mehr schließt.

Der Erfindung liegt deshalb die Aufgabe zugrunde, eine Vorrichtung der eingangs genannten Art so zu verbessern, dass im Explosionsfall die Anlagenteile in Strömungsrichtung vor der Explosionsschutzvorrichtung sicher vor dem Explosionsdruck oder einer explosiven Flamme geschützt werden.

Diese Aufgabe wird durch die im Patentanspruch 1 angegebene Erfindung gelöst. Weiterbildungen und vorteilhafte Ausführungsbeispiele sind in den Unteransprüchen angegeben.

Die Erfindung bezieht sich konkret auf eine Explosionsschutzvorrichtung zur explosionsmäßigen Entkopplung zweier Anlagenteile, die mittels einer Rohrleitung miteinander verbunden sind, in der explosive Stäube oder Gase in einer Strömungsrichtung (10) gefördert werden, wobei innerhalb der Rohrleitung ein Rohrköper (1) angeordnet ist, wobei der Rohrkörper (1) eine Einlassöffnung (2) und eine axial beabstandete Auslassöffnung (3) mit mindestens einem dazwischen angeordneten Schließorgan (4, 5) enthält,
dadurch gekennzeichnet, dass zwischen der Einlassöffnung (2) und der Auslassöffnung (3) mindestens zwei axial beabstandete unterschiedlich ausgebildete Schließorgane (4, 5) vorgesehen und diese abwechselnd nacheinander im Rohrkörper (1) angeordnet sind, wobei jedes Schließorgan (4, 5) zwei schräg in den Rohrkörper (1) ragende Biegeplatten (6) enthält, die in Strömungsrichtung (10) den Durchströmquerschnitt (8) zunehmend verengen, wobei ein radiales Schließorgan (5) zwei Biegeplatten (6) an gegenüberliegenden Innenwänden (13) des Rohrkörpers (1) enthält und ein zentrales Schließorgan (4) zwei im Zentrum (9) des Rohrkörpers (1) angeordnete und v-förmig miteinander verbundene Biegeplatten (6) enthält, wobei die Biegeplatten (6) so elastisch oder plastisch verbiegbar sind, dass diese bei einem Explosionsdruck den Durchströmquerschnitt (8) des Rohrkörpers (1) in Gegenrichtung zur Strömungsrichtung (10) verschließen.

Die Erfindung hat den Vorteil, dass die Explosionsschutzvorrichtung im Grunde ohne Rückschlagklappen ausführbar ist und damit lageunabhängig vor den zu schützenden Anlagenteilen eingebaut werden kann.

Die Erfindung hat weiterhin den Vorteil, dass durch die Verwendung von Biegeplatten (6) für die Schließorgane (4, 5) diese keine beweglich gelagerten Teile aufweisen, deren Beweglichkeit durch Verschmutzung behindert werden könnte. Das bietet im Explosionsfall eine hohe Funktionssicherheit, ohne dass dafür aufwendige Überwachungssysteme notwendig sind. Dabei weisen insbesondere die Explosionsschutzvorrichtungen mit Schließorganen (4, 5) aus elastischen Biegeplatten (6) vorteilhafterweise keine Verschleißteile auf, so dass dadurch die Funktionssicherheit bei langen Betriebszeiten erhöht wird.

In einer Weiterbildung der Erfindung ist der Rohrkörper (1) als Vierkantrohr oder Rundrohr ausgebildet, der oben durch einen Rohrdeckel (15) und unten durch ein Umlenkblech (22) verschlossen ist, wobei unterhalb des Rohrdeckels (15) in einer Seitenwand die Einlassöffnung (2) und davon axial beabstandet oberhalb des Umlenkbleches (22) in einer gegenüberliegenden Seitenwand die Auslassöffnung (3) angeordnet ist. Diese Weiterbildung hat den Vorteil eines geringen Platzbedarfs gegenüber herkömmlichen Vorrichtungen, da die erfindungsgemäße Explosionsschutzvorrichtung nicht wesentlich in den Raum hineinragt.

Eine bevorzugte Ausführungsform der Erfindung sieht vor, dass im Rohrkörper (1) axial zwischen der Einlassöffnung (2) und der Auslassöffnung (3) mindestens ein zentrales Schließorgan (4) vorgesehen ist, das aus einem längs gerichteten zentralen Befestigungselement (7) und zwei quadratischen oder rechteckigen Biegeplatten (6) besteht, wobei das zentrale Befestigungselement (7) als ein v-förmig abgewinkeltes Blechteil ausgebildet ist, dessen Öffnungswinkel (18) einen spitzen Winkel von 25° bis 35° aufweist, wobei an den gegenüberliegenden Enden des Blechteils mindestens jeweils eine 90° abgewinkelte Befestigungsnase (19) vorgesehen ist, die an gegenüberliegenden Innenwänden (13) des Rohrkörpers (1) befestigt sind.

Mit dieser bevorzugten Ausführungsform wird eine Überdeckung bzw. Überlappung der Biegeplatten (6) erreicht, die eine effektive Umlenkung der Strömung bewirkt. Diese Umlenkung der Strömung dient auch zur Flammenlöschung.

Ferner kann in einer anderen Weiterbildung der Erfindung im Rohrkörper (1) axial zwischen der Einlassöffnung (1) und der Auslassöffnung (3) mindestens ein radiales Schließorgan (5) vorgesehen sein, das aus zwei gegenüberliegenden Schließorganteilen besteht, wobei jedes Schließorganteil ein längs gerichtetes radiales Befestigungselement (17) und eine rechteckige oder quadratische Biegeplatte (6) enthält, und wobei das radiale Befestigungselement (17) als schräg nach innen zum Zentrum (9) abgewinkeltes Blechteil ausgebildet ist, das mit der jeweiligen Innenwand (13) einen Öffnungswinkel (18) von 12,5° bis 17,5° aufweist, wobei an den gegenüberliegenden Enden des abgewinkelten Blechteils jeweils mindestens eine 90° abgewinkelte Befestigungsnase (19) vorgesehen ist, die an gegenüberliegenden Innenwänden (13) des Rohrkörpers (1) befestigt sind. Auch diese Weiterbildung hat den Vorteil eines geringen Platzbedarfs gegenüber herkömmlichen Vorrichtungen.

Durch die schräg in Strömungsrichtung (10) in den Durchströmquerschnitt (8) ragenden Schließorgane (4, 5) wird vorteilhafterweise erreicht, dass diese in Strömungsrichtung (10) den durchströmenden Staub-Luftgemischen oder anderen explosionsgefährdenden Gasen keinen nennenswerten Durchströmwiderstand entgegensetzen. Dadurch können insbesondere die darin enthaltenen Staubpartikel vorteilhaft ohne nennenswerte Staubablagerungen an möglichen Engstellen oder Umlenkkanten abgeführt oder abgesaugt werden. Gleichzeitig bieten die schräg in den Durchströmquerschnitt (10) ragenden Schließorgane (4, 5) im Explosionsfall eine sich radial verbiegende Angriffsfläche, so dass sich der Durchströmquerschnitt (8) entgegen der normalen Durchströmrichtung sicher verschließt. Radial bedeutet dabei, dass sich die Biegeplatten (6) quer zur Längsrichtung der Explosionsschutzvorrichtung verbiegen. Dabei ist insbesondere die abwechselnde Anordnung von zentralen Schließorganen (4) und radialen Schließorganen (5) vorteilhaft, da hierdurch im Explosionsfall zwischen den Schließorganen (4, 5) eine radiale Umlenkung der explosiven Gase erreicht wird, durch die selbsttätig eine sichere radiale Biegung der Biegeplatten (6) in Schließrichtung erfolgt. Als radiale Schließorgane (5) werden dabei diejenigen bezeichnet, die quer und beabstandet vom Zentrum an den Innenwänden (13) des Rohrkörpers (1) der Explosionsschutzvorrichtung angebracht sind. Gleichzeitig wird dadurch im Explosionsfall die Strömungsgeschwindigkeit der Explosionsgase verringert, wodurch sich die Schließorgane (4, 5) zeitverzögert nacheinander schließen, ohne dass ein schneller erster Druckstoß zur Einlassöffnung (2) gelangen kann.

Durch die axial abwechselnde Anordnung der zentralen Schließorgane (4) und der radialen Schließorgane (5) und der sich in Strömungsrichtung (10) radial überlappenden Verengungen im Rohrkörper (1) entsteht vorteilhafterweise auch in Strömungsrichtung (10) eine Umlenkung der explosiven Gase, wodurch sich die Durchströmgeschwindigkeit insgesamt nicht beschleunigt, so dass sich die Explosionsgefahr in der Explosionsschutzvorrichtung nicht erhöht.

In einer Weiterbildung der Erfindung bestehen die Biegeplatten (6) aus biegeelastischem Stahlblech, die eine Blechdicke von 0,5 mm bis 1,5 mm aufweisen und dabei so ausgebildet sind, dass sie bei einem Explosionsvorgang sich so weit entgegen der Strömungsrichtung (10) verbiegen, dass der Rohrkörper (1) in diese Richtung geschlossen ist und die Biegeplatten (6) nach Abklingen des Explosionsdrucks wieder in ihre Ausgangslage zurückkehren. Diese Weiterbildung weist den Vorteil auf, dass die Anlagenverfügbarkeit nach Abklingen des Explosionsdrucks sofort wieder gegeben ist, wenn die Biegeplatten (6) in ihre Ausgangslage zurückgekehrt. Damit verringern sich Wartung und Kosten deutlich.

Eine bevorzugte Ausführungsform der Erfindung sieht vor, dass im Rohrkörper (1) in Strömungsrichtung (10) nach der Einlassöffnung (2) und/oder nach der Auslassöffnung (3) jeweils eine Rückschlagklappe (11, 12) angeordnet ist, die in Strömungsrichtung (10) von Durchströmdruck öffenbar und im Explosionsfall entgegen der Strömungsrichtung (10) verschließbar ist. Diese bevorzugte Ausführungsform dient vorteilhafterweise der Absicherung gegen eine Brandausbreitung.

Eine besondere Ausbildung der Erfindung mit einer oder zwei zusätzlichen Rückschlagklappen (11, 12) hat den Vorteil, dass dadurch im Explosionsfall die Einlassöffnung (2) und/oder Auslassöffnung (3) entgegen der Strömungsrichtung (10) dichter verschließbar ist. Dadurch wird die Entkopplung der Anlagenteile in Strömungsrichtung (10) vor der Einlassöffnung (2) erheblich verbessert, da die Rückschlagklappen (11, 12) wegen der überlappenden Anlageflächen die Einlassöffnungen (2) und die Auslassöffnungen (3) nahezu luftdicht abdichten können. Dadurch ist gleichzeitig auch eine dichte Flammenabsperrung erreichbar, so dass ein Flammendurchschlag bis vor die Einlassöffnung (2) sicher verhindert wird. Dabei hat die seitliche Zuführung zu den Einlassöffnungen (2) und der Auslassöffnungen (3) zusätzlich den Vorteil, dass im Explosionsfall die explosiven Gase mindestens zweimal um 90° umgeleitet werden, wodurch sich die Strömungsgeschwindigkeit zusätzlich verringert. Dadurch wird gleichzeitig der Explosionsdruck in der Explosionsschutzvorrichtung vermindert, so dass ein hoher Explosionsdruck besser von der Einlassöffnung ferngehalten werden kann.

In einer zu der vorstehenden besonderen Ausbildung der Erfindung alternativen Ausführungsform ist im Rohrkörper (1) in Strömungsrichtung (10) nach der Einlassöffnung (2) eine mehrteilige Verschlusseinrichtung angeordnet, die in Strömungsrichtung (10) vom Durchströmdruck öffenbar und im Explosionsfall entgegen der Strömungsrichtung (10) verschließbar ist.

Die mehrteilige Verschlusseinrichtung ist in der Art eines Vorhangs anstelle der Rückschlagklappe (11) angeordnet, das heißt, dass die mehreren Elemente der mehrteiligen Verschlusseinrichtung herabhängen und die Einlassöffnung (2) verschließen. Wenn in der Strömungsrichtung (10) explosionsgefährdete Gase oder Staub-Luftgemische zugeführt werden, wird nicht die gesamte mehrteilige Verschlusseinrichtung geöffnet, sondern nur so viele Elemente, wie für den Gasdurchgang notwendig sind. Dies hat gleichzeitig den Vorteil, dass die mehrteilige Verschlusseinrichtung als eine Art Partikelbremse wirkt, indem die Partikel an den einzelnen Elementen hängenbleiben, dann herabrieseln und so bereits aus der Strömung zumindest teilweise entfernt werden. Dadurch kann der Verschleiß an den einzelnen Teilen der erfindungsgemäßen Explosionsschutzvorrichtung verringert werden. Insbesondere die Lebensdauer einer (in den Figuren nicht dargestellten) Filteranlage kann deutlich erhöht werden.

Die mehrteilige Verschlusseinrichtung ist vorzugsweise ausgewählt aus Metallstreifen, Kettenelementen, Magnetbändern und/oder Kombinationen davon. Dabei können die Metallstreifen vorteilhafterweise so ausgestaltet sein, dass sie nebeneinander liegend oder überlappend die Einlassöffnung (2) verschließen. Ebenso sind die Kettenelemente so angeordnet, dass sich im vorteilhaftesten Fall ein nahezu vollständiger Verschluss der Einlassöffnung (2) ergibt. Insbesondere Kombinationen aus den unterschiedlichen Elementen der mehrteiligen Verschlusseinrichtung stellen ein sicheres Verschließen der Einlassöffnung (2) sicher.

Die Erfindung wird anhand eines Ausführungsbeispiels, das in den Figuren dargestellt ist, näher erläutert. Weitere Ziele, Merkmale, Vorteile und Anwendungsmöglichkeiten ergeben sich aus der nachfolgenden Beschreibung von die Erfindung nicht einschränkenden Ausführungsbeispielen anhand der Figuren. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbeziehung. Es zeigen:
- Fig. 1:: eine perspektivische Schnittdarstellung einer Explosionsschutzvorrichtung nach einer bevorzugten Ausführungsform der Erfindung, und
- Fig. 2:: eine Seitenansicht in Schnittdarstellung der Explosionsschutzvorrichtung.

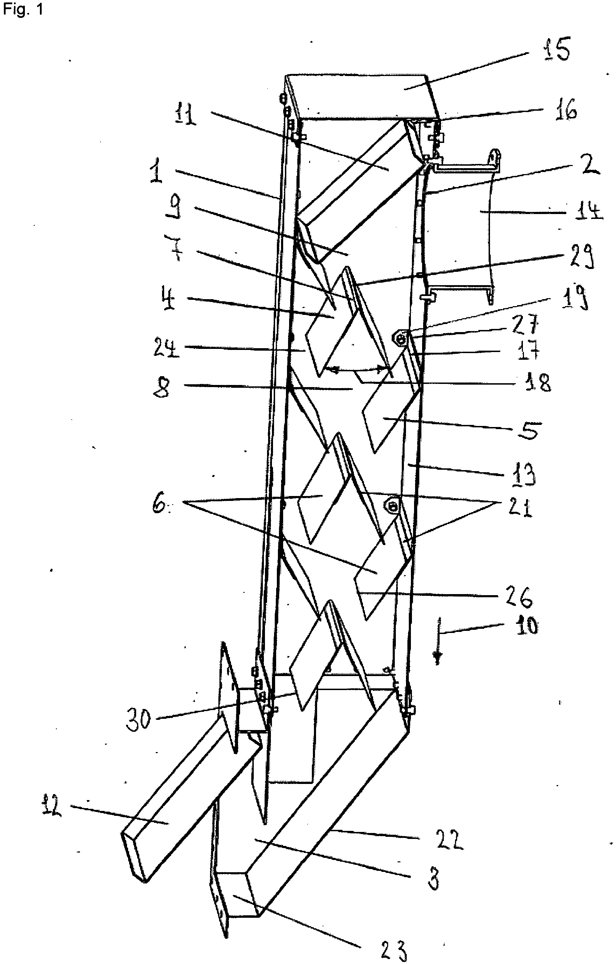

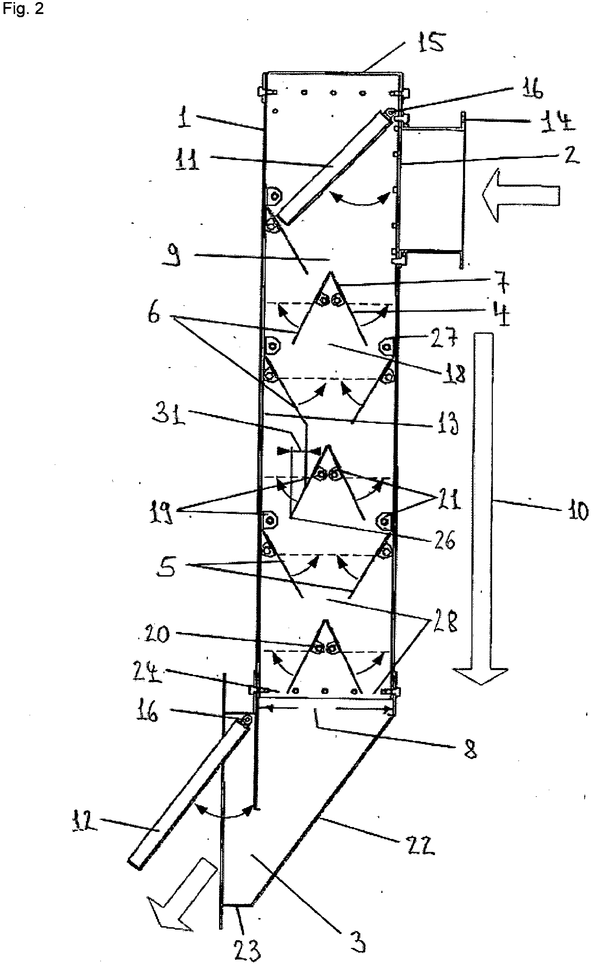

In den Figuren 1 und 2 ist eine Explosionsschutzvorrichtung in zwei verschiedenen Ansichten dargestellt, die einen Rohrköper 1 enthält, in dessen Innenraum fünf Schließorgane 4, 5 angeordnet sind, die in Strömungsrichtung 10 axial abwechselnd im Zentrum 9 oder an zwei radial gegenüberliegenden Innenwänden 13 des Rohrkörpers 1 befestigt sind, wobei die Schließorgane 4, 5 zwei schräg in den Durchströmquerschnitt 8 ragende elastische Biegeplatten 6 enthalten, die im Explosionsfall den Durchströmquerschnitt 8 entgegen der Strömungsrichtung 10 verschließen.

Die dargestellte Explosionsschutzvorrichtung ist insbesondere zur explosionsmäßigen Entkopplung von Filteranlagen vorgesehen, die aus einem Staub-Luftgemisch die explosiven Stäube ausfiltern sollen. Eine derartige Explosionsschutzvorrichtung ist aber auch zwischen anderen Anlagenteilen einsetzbar, bei denen mögliche Explosionsdrücke oder explosive Flammen in Strömungsrichtung 10 nach der Auslassöffnung 3 entstehen können und diese nicht in Anlagenteile jenseits der Einlassöffnung 2 gelangen sollen. Dazu wird vorzugsweise in ein nicht dargestelltes Rohrsystem zwischen diesen Anlagenteilen eine rohrförmige Explosionsschutzvorrichtung eingebaut, die das Rohrsystem entgegen der vorgesehenen Strömungsrichtung 10 verschließen kann.

Die Explosionsschutzvorrichtung enthält deshalb einen Rohrkörper 1, der in dieses Rohrsystem oder vor die explosionsmäßig zu schützenden Anlagenteile eingebaut wird. Dabei ist der Rohrkörper 1 vorzugsweise als Vierkantrohr ausgebildet, das oben eine Einlassöffnung 2 und unten eine Auslassöffnung 3 aufweist. Der Rohrköper 1 besteht aus einem 2 mm bis 6 mm dicken Stahlblech, das dem Druck derartiger Explosionen sicher standhält. Dabei besitzt der Rohrkörper 1 vorzugsweise eine Länge von ca. 50 cm bis 150 cm und einen Rohrquerschnitt von vorzugweise 30 cm x 30 cm. Je nach Durchströmmenge oder vorhandenem Bauraum sind auch andere Abmessungen des Rohrkörpers 1 ausführbar.

Die Einlassöffnung 2 ist bei dem dargestellten Rohrkörper 1 oben seitlich nach einem Rundrohrstutzen 14 vorgesehen, über den die explosionsgefährdeten Gase oder Staub-Luftgemische zugeführt werden. Am oberen Ende des Rohrkörpers 1 ist ein Rohrdeckel 15 angebracht, durch den dieser nach oben abgedichtet ist. Nach dem Rundrohrstutzen 14 ist im Rohrinnenraum zunächst eine obere Rückschlagklappe 11 angeordnet, die über ein Scharnier 16 mit einer Seite der Rohrinnenwand 13 verbunden ist. Dabei ist die obere Rückschlagklappe 11 so ausgebildet, dass damit die Einlassöffnung 1 abdeckbar ist, wobei diese bei einem eingeleiteten Staub-Luftgemisch entgegen ihrer Schwerkraft nach innen verschwenkt und damit geöffnet wird.

Unterhalb der Einlassöffnung 2 ist ein zentrales Schließorgan 4 angeordnet, das im Zentrum 9 in der Mitte zwischen den beiden gegenüberliegenden Innenwänden 13 des Rohrkörpers 1 angeordnet und an den anderen beiden Innenwänden 13 befestigt ist. Dabei besteht das zentrale Schließorgan 4 aus einem zentralen Befestigungselement 7 und zwei rechteckigen Biegeplatten 6. Das zentrale Befestigungselement 7 ist dabei als v-förmig abgewinkeltes Blechteil ausgebildet, das zur Einlassöffnung 2 über eine spitze Kante 29 verfügt, die quer zur Strömungsrichtung 10 ausgerichtet ist. Das zentrale Befestigungselement 7 weist dabei zur Auslassöffnung 3 eine spitzwinklige Öffnung 18 auf, die ein Winkelbereich von ca. 25° bis 35° vorzugsweise von 30° besitzt. Das zentrale Befestigungselement 7 ist aus einem starren Stahlblech ausgeführt und erstreckt sich zwischen zwei gegenüberliegenden Innenwänden vorzugsweise quer zur Innenwand 13 mit der Einlassöffnung 2. Dabei besitzt das zentrale Befestigungselement 7 an seinen Endbereichen noch zwei oder vier abgewinkelte Befestigungsnasen 19 in denen jeweils eine Befestigungsbohrung 20 angeordnet ist. Die Befestigungsnasen 19 sind dabei jeweils an den gegenüberliegenden Innenwänden 13 des Rohrkörpers 1 vorzugsweise über eine Schraubverbindung mit dem Rohrkörper 1 befestigt. Das zentrale Befestigungselement 7 ist dabei so an den gegenüberliegenden Innenwänden 13 befestigt, dass es symmetrisch im Zentrum 9 des Rohrkörpers 1 angeordnet ist.

Als Verlängerung der abgewinkelten Schenkel 21 des zentralen Befestigungselementes 7 ist an diesem jeweils eine Biegeplatte 6 befestigt, wodurch sich die Schenkel 21 des zentralen Schließorgans 4 auf eine Läge von ca. 21 cm verlängern. Dabei überragen die als elastische Bleche ausgebildeten Biegeplatten 6 die Schenkel 21 der starren zentralen Befestigungselemente 7 um mindestens 14 cm, wobei die biegsamen Schenkel 21 allein etwa 2/3 der Gesamtlänge in Strömungsrichtung 10 ausmachen. Das zentrale Schließorgan 4 erstreckt sich dabei zwischen seinen radialen Endkanten 30 auf einem Öffnungsabstand von ca. 15 cm bis 20 cm, so dass diese den Durchströmquerschnitt 8 des Rohrköpers 1 auf etwa 30 % bis 70 % - vorzugsweise 50 % - kontinuierlich entlang seiner abgewinkelten Schenkel 21 verringern. Die Biegeplatten 6 sind dabei rechteckig ausgebildet und weisen eine Breite von ca. 29,9 cm auf, die etwa der Breite des Innenrohrs entspricht. Die Länge ist vorzugsweise 20 cm und überlappt die Schenkel des Befestigungselements 7 um 6 cm, so dass sich der frei zurückbiegbare Teil der Biegeplatten 6 von ca. 14 cm in jedem Fall an den gegenüberliegenden Innenwänden 13 zum Verschließen anlegen kann. Dabei weisen die Biegeplatten 6 eine Dicke von vorzugweise 0,5 mm bis 4 mm auf, die hauptsächlich von deren Elastizität abhängig ist, nach der diese im Explosionsfall bis zu den Innenwänden 13 zurückbiegbar sein müssen. Dabei können in den Biegeplatten 6 auch Quernuten als Biegegelenke vorgesehen werden, um im Explosionsfall ein Verschließen der Schließorgane 4, 5 zu beschleunigen.

Axial unterhalb des zentralen Schließorgans 4 ist noch mindestens ein radiales Schließorgan 5 angeordnet, das im Randbereich des Rohrkörpers 1 angeordnet ist. Dieses radiale Schließorgan 5 ist zweiteilig ausgebildet und an 180° gegenüberliegenden Innenwänden 13 des Rohrkörpers 1 befestigt. Dabei besteht jedes Teil des radialen Schließorgans 5 aus einem einseitigen radialen Befestigungselement 17 und einer Biegeplatte 6. Das radiale Befestigungselement 17 enthält dabei ein langgestrecktes Blechteil, das seitlich quer zur Strömungsrichtung 10 abgeknickt ist und mit einem Teil auf der Innenwand 13 des Rohrkörpers 1 aufliegt. Dabei ist das radiale Befestigungselement 17 vorzugsweise an der Innenwand 13 des Rohrkörpers 1 mit der Einlassöffnung 2 und das gegenüberliegende Teil des radialen Befestigungselements 17 an der Innenwand 13 mit der Auslassöffnung 3 befestigt. Der abgeknickte Teil des radialen Befestigungselements 17 als abgewinkelter Schenkel 21 bildet dabei mit der Innenwand 13 einen spitzen Winkel von 12,5° bis 17,5° - vorzugsweise von 15° - und entspricht dabei der Hälfte des Öffnungswinkels 18 des zentralen Schließorgans 4. An den Endbereichen des radialen Befestigungselements 17 sind dabei auch zwei Befestigungsnasen 19 mit Befestigungsbohrungen 20 vorgesehen, die an den gegenüberliegenden Innenwänden 13 angeschraubt sind.

In Verlängerung des abknickenden Teils des radialen Befestigungselements 17 ist ebenfalls eine Biegeplatte 6 befestigt, die im Grunde der Biegeplatte 6 des zentralen Schließorgans 4 entspricht. Die gegenüberliegenden Biegeplatten 6 des radialen Schließorgans 5 ragen dabei radial bzw. quer in den Durchströmquerschnitt 8 des Rohrkörpers 1 ein und verengen diesen linear in Strömungsrichtung 10 auf ca. 1/3 oder auf einen Abstand der unteren Kanten 26 der beiden Biegeplatten 6 auf ca. 10 cm. Dabei überragen die Biegeplatten 6 der beiden radialen Befestigungselemente 17 des radialen Schließorgans 5 diese in Längs- oder Strömungsrichtung 10 um ca. 2/3 oder ca. 14 cm, wobei jedes Teil des Schließorgans 5 mit einer Länge von ca. 21 cm schräg in den Durchströmquerschnitt ragt.

Da die Biegeplatten 6 ebenfalls elastisch oder mit einem Biegegelenk ausgebildet sind, werden sie im Explosionsfall soweit radial nach innen zum Zentrum 9 gebogen, dass sie sich dort überlappen und entgegen der Strömungsrichtung 10 den Rohrkörper 1 verschließen. Um den Rückbiegeprozess im Explosionsfall nicht zu behindern, ist der axiale Abstand zwischen den unteren Kanten 26 der Biegeplatte 6 der zentralen Schließorgane 4 und den oberen Kanten 27 der radialen Befestigungselemente 17 der radialen Schließorgane 5 so weit, dass sich diese nicht überlappen oder einen axialen Abstand vorzugsweise von 1 cm bis 10 cm betragen können.

Durch die zwei nacheinander angeordneten zentralen Schließorgane 4 und radialen Schließorgane 5 mit den zueinander seitlich versetzten und in den Durchströmquerschnitt 8 ragenden Biegeplatten 6 überlappen sich die verengenden Durchströmquerschnitte 8 des zentralen Schließorgans 4 mit dem des radialen Schließorgans 5 um ca. 1/6 oder 5 cm Überlappungsabstand 31. Insofern entsteht eine seitliche Umlenkung des durchströmenden Staub-Luftgemisches zwischen den nacheinander folgenden Schließorganen 4, 5, was insgesamt eine Beschleunigung der Durchströmgeschwindigkeit verhindert und im Explosionsfall die Schließgeschwindigkeit der Schließorgane 4, 5 erhöht.

Unter den oberen beiden unterschiedlichen Schließorganen 4, 5 folgen im dargestellten Ausführungsbeispiel noch drei weitere Schließorgane 4, 5 die im Wechsel als zentrales Schließorgan 4 und radiales Schließorgan 5 axial nacheinander im Rohrkörper 1 angeordnet und wie die ersten beiden Schließorgane 4, 5 im Rohrkörper 1 befestigt sind. Dabei sind die unteren drei zusätzlichen Schließorgane 4, 5 vorgesehen, um im Explosionsfall den Explosionsdruck dichter gegenüber der Einlassöffnung 2 zu verschließen. Das Verschließen erfolgt dabei kaskadenmäßig von unten nach oben, so dass einheitlich ein kontinuierliches Verschließen von unten her erfolgt. Dadurch erhöht sich der Druckanstieg nach oben in einer gewissen Zeitspanne, so dass die obere Rückschlagklappe 11 durch einen verhältnismäßig langsamen Druckanstieg durch ihre Schwerkraftwirkung auch sicher verschließbar ist.

Am unteren Ende des Rohrkörpers 1 ist ein Umlenkblech 22 angeordnet, das schräg zwischen den beiden gegenüberliegenden Rohrwänden mit der Einlassöffnung 2 und der Auslassöffnung 3 verläuft und den Rohrkörper 1 nach unten verschließt. Dabei ist in der Rohrwand mit der Auslassöffnung 3 ein Vierkantrohrstutzen 23 angeordnet, in dem eine untere Rückschlagklappe 12 befestigt ist. Die untere Rückschlagklappe 12 ist dabei nach außen über ein Scharnier 16 verschwenkbar, die durch den Druck in Strömungsrichtung 10 geöffnet wird. Ohne diesen Druck schließt sich die untere Rückschlagklappe 12 durch ihre Schwerkraftwirkung und verschließt die untere Auslassöffnung 3 entgegen der Durchströmrichtung 10. Dabei dient die untere Rückschlagklappe 12 insbesondere dazu, die Abdichtwirkung im Explosionsfall zusätzlich zu verbessern und dabei auch bei hohen Druckunterschieden eine sichere Druckentkopplung zwischen der Auslassöffnung 3 und Einlassöffnung 2 zu erreichen. Die dargestellte Explosionsschutzvorrichtung ist vorzugsweise in einer Staubabzugsanlage eingebaut, bei der nach der Auslassöffnung 3 eine nicht dargestellte Filteranlage vorgesehen ist, die die Staubpartikel im Filter abscheiden soll. Da in dieser Filteranlage eine Staubkonzentration erfolgt, kann es dort auch leicht zu Staubexplosionen kommen, vor denen Anlagenteile vor der Einlassöffnung 2 sicher geschützt werden sollen.

Eine derartige Explosionsschutzvorrichtung arbeitet funktionstechnisch dabei wie folgt:
Im Normalbetrieb werden vor der Eintrittsöffnung 2 explosive Stäube abgesaugt, die in einem Staub-Luftgemisch in den Rundrohrstutzen 14 eingeblasen werden. Dadurch entsteht ein gewisser Überdruck, der zunächst die obere Rückschlagklappe 11 öffnet, so dass das Staub-Luftgemisch in den Rohrkörper 1 einströmt und durch die schräge Rückschlagklappenstellung nach unten in den Rohrkörper 1 umgeleitet wird. Dabei trifft das Staub-Luftgemisch zunächst auf das zentralen Schließorgan 4, das den Durchlassquerschnitt 8 der Rohrinnenfläche von 30 cm x 30 cm in diesem axialen Bereich durch die schräg in den Durchlassquerschnitt 8 ragenden Biegeplatten 6 kontinuierlich verringert, wodurch sich die Durchströmgeschwindigkeit dort leicht erhöht.

Da dieser Durchströmdruck verhältnismäßig gering ist, werden die Biegeplatten 6 dadurch nicht verbogen, so dass das Staub-Luftgemisch außen an den schrägen Biegeplatten 6 entlang strömt und sich durch die danach folgende Querschnittsvergrößerung wieder verlangsamt und im Zentrum 9 durch den Öffnungsschlitz 28 des radialen Schließorgans 5 in Strömungsrichtung 10 nach unten strömt. Durch die schräg nach innen gerichteten beiden an den gegenüberliegenden Innenwänden 13 angeordneten Biegeplatten 6 wird das Staub-Luftgemisch gleichzeitig umgeleitet und durch die kontinuierliche Verringerung des Durchströmquerschnitts 8 erfolgt wieder eine leichte Erhöhung der Durchströmgeschwindigkeit mit der das Staub-Luftgemisch auf das nächste zentrale Schließorgan 4 trifft.

Durch die axial abwechselnde Anordnung der zentralen Schließorgane 4 und der radialen Schließorgane 5 erfolgt ein gleichmäßig durchströmendes Staub-Luftgemisch und zwar bis zur Auslassöffnung 3. Da der Rohrkörper 1 und die darin angeordneten Schließorgane 4, 5 aus Metall, vorzugsweise aus einem Stahlblech, gefertigt sind, wird das Staub-Luftgemisch zusätzlich noch abgekühlt, so dass dadurch gleichzeitig die Explosionsgefahr nach der Auslassöffnung 3 vermindert wird.

Bei der Durchleitung oder Förderung von Staub-Luftgemischen oder anderen explosionsgefährdeten Gasen muss dafür Vorsorge getroffen werden, dass diese bei Explosionen örtlich begrenzt werden, um Schäden in benachbarten Anlagenteilen zu vermeiden. Deshalb ist in diesem Fall vor einer nicht dargestellten Filteranlage die vorbeschriebene Explosionsschutzvorrichtung eingebaut, die eine Rückwirkung der Explosionen entgegen der Strömungsrichtung 10 verhindern soll. Im Explosionsfall tritt dabei ein erheblicher Überdruck mit einer Hitzewirkung oder einer Explosionsflamme am Vierkantrohrstutzen 23 und der Auslassöffnung 3 auf, durch den die explodierenden Gase in den Rohrkörper 1 mit einem erheblichen Überdruck einströmen. Durch einen schnellen Druckaufbau aufgrund der Explosionswirkung unter der unteren Rückschlagklappe 12 wird diese häufig zusätzlich nach oben gedrückt, so dass diese im Explosionsfall oft nicht sofort schließt, sondern zunächst geöffnet bleibt. Deshalb dringen die explodierenden Gase über die Auslassöffnung 3 entgegen der normalen Strömungsrichtung 10 über das Umlenkblech 22 in den Rohrkörper 1 ein. Dadurch werden zunächst die beiden v-förmig angeordneten Biegeplatten 6 des unteren zentralen Schließorgans 4 nach außen gedrückt, wobei sich diese radial nach außen in Richtung der Innenwände 13 verbiegen und einen Teil der explodierenden Gase in den noch verbleibenden seitlichen Durchströmspalten 24 an diesen außen vorbeileiten.

Dabei gelangt ein Teil dieser explodierenden Gase unter die beiden nach außen ragenden Biegeplatten 6 des darüber angeordneten radialen Schließorgans 5 und drücken diese radial in Richtung des Zentrums 9, wobei sich diese radial nach innen verbiegen. Dadurch werden die explodierenden Gase durch das Auseinanderbiegen der Biegeplatten 6 verstärkt radial umgeleitet, wobei oberhalb der Biegeplatten 6 ein Unterdruck entsteht, der den Biegevorgang beschleunigt. Dieser Vorgang setzt sich auch bei den drei darüber angeordneten Schließorganen 4, 5 fort, so dass auch bei diesen zeitlich nacheinander die Biegeplatten 6 sich radial nach außen oder nach innen verbiegen. Dabei werden die Biegeplatten 6 der zentralen Schließorgane 4 bis an die gegenüberliegenden Innenwände 13 gebogen, so dass dadurch der gesamte Durchströmquerschnitt 8 zur Einlassöffnung 2 verschlossen wird. Hingegen werden im Explosionsfall durch die zurückströmenden Explosionsgase die Biegeplatten 6 der radialen Schließorgane 5 stark nach innen zum Zentrum 9 gebogen, bis sich diese überlappend mit ihren Kantenbereichen aufeinander liegend und dadurch ebenfalls den Durchströmquerschnitt 8 in Richtung der Einlassöffnung 2 verschließen.

Dabei reichen im Grunde bereits zwei hintereinander angeordnete Schließorgane 4,5, nämlich ein zentrales Schließorgan 4 und radiales Schließorgan 5 mit ihren Umlenkwirkungen aus, um den Explosionsdruck zwischen der Auslassöffnung 3 und der Einlassöffnung 2 zu entkoppeln. Allerdings verschließen die vier anliegenden Biegeplatten 6 den Rückströmweg entgegen der Strömungsrichtung 10 nicht luftdicht, so dass zusätzlich noch drei weitere Schließorgane 4, 5 vorgesehen sind, um die Dichtigkeit zwischen der Auslassöffnung 3 und der Einlassöffnung 2 zu erhöhen.

Durch das Verschließen der Schließorgane 4, 5 wird im Explosionsfall gleichzeitig die Rückströmwirkung entgegen der Strömungsrichtung 10 unterbrochen, so dass sich der Druck unter den Rückschlagklappen 11, 12 verringert. Dadurch verschwenken sich die Rückschlagklappen 11, 12 durch ihre Schwerkraftwirkung nach unten und die Einlassöffnung 2 und die Auslassöffnung 3 werden separat verschlossen. Da diese in ihren Auflageflächen vorteilhafterweise mit Dichtungsmaterial versehen sind, wird dadurch die Dichtwirkung zwischen der Auslassöffnung 3 und der Einlassöffnung 2 zusätzlich erhöht, wodurch gleichzeitig auch eine verbesserte Flammensperre geschaffen wird.

Die Rückschlagklappen 11, 12 dienen gleichzeitig dazu, die Rückströmrichtung über einen längeren Zeitraum zu verschließen, da es bei den vorzugsweise elastischen Biegeplatten 6 schon bei einem noch vorhandenen geringen Explosionsdruck vorkommen kann, dass sich diese Schließorgane 4, 5 öffnen und dann noch restliche explodierte Gase oder Flammen zur Einlassöffnung 2 gelangen können.

Die Schließorgane 4, 5 können aber auch aus nichtelastischen Biegeplatten 6 bestehen, die geschlossen bleiben und nach dem Explosionsfall ausgetauscht werden müssen. Insofern könnte der Rohrkörper 1 auch ohne Rückschlagklappen 11, 12 ausgebildet sein. In diesem Fall könnten die Einlassöffnung 2 und die Auslassöffnung 3 auch axial anstatt des Rohrdeckels 15 und des Umlenkblechs 22 mit entsprechenden Rohrstutzen versehen werden.

Als Rohrkörper 1 ist vorzugsweise ein Vierkantrohr vorgesehen, da dies wegen der quadratischen oder rechteckigen Form der Biegeplatten 6 und deren Befestigungselementen 17 einfacher montierbar ist. Der Rohrkörper 1 kann aber auch als Rundrohr ausgebildet sein, wobei dann die Schließorgane 4, 5 daran mit entsprechend abgerundeten Biegeplatten 6 und entsprechenden Befestigungselementen angepasst sein müssten.

Zur Herstellung des Rohrkörpers 1 und der Schließorgane 4, 5, sowie der Befestigungselemente 17 eignen sich vorzugsweise Stahlbleche oder andere Blechteile. Allerdings könnte es wegen der Elastizität und der Materialglätte (Nichtanhaftung) auch vorteilhaft sein, mindestens die Schließorgane 4, 5 aus Edelstahlblechen zu fertigen.

### Bezugszeichen

- 1: Rohrkörper
- 2: Einlassöffnung
- 3: Auslassöffnung
- 4: zentrales Schließorgan
- 5: radiales Schließorgan
- 6: Biegeplatten
- 7: zentrales Befestigungselement
- 8: Durchströmquerschnitt
- 9: Zentrum
- 10: Strömungsrichtung
- 11: obere Rückschlagklappe
- 12: untere Rückschlagklappe
- 13: gegenüberliegende Innenwände
- 14: Rundrohrstutzen
- 15: Rohrdeckel
- 16: Scharnier
- 17: radiales Befestigungselement
- 18: spitzwinklige Öffnung
- 19: abgewinkelte Befestigungsnasen
- 20: Befestigungsbohrung
- 21: abgewinkelte Schenkel
- 22: Umlenkblech
- 23: Vierkantrohrstutzen
- 24: Durchströmspalten
- 26: unteren Kanten
- 27: oberen Kanten
- 28: Öffnungsschlitz
- 29: spitze Kante
- 30: radiale Endkanten
- 31: Überlappungsabstand

## Patentansprüche

1. Explosionsschutzvorrichtung zur explosionsmäßigen Entkopplung zweier Anlagenteile, die mittels einer Rohrleitung miteinander verbunden sind, in der explosive Stäube oder Gase in einer Strömungsrichtung (10) gefördert werden, wobei innerhalb der Rohrleitung ein Rohrkörper (1) angeordnet ist, wobei der Rohrkörper (1) eine Einlassöffnung (2) und eine axial beabstandete Auslassöffnung (3) mit mindestens einem dazwischen angeordneten Schließorgan (4, 5) enthält,
**dadurch gekennzeichnet, dass** zwischen der Einlassöffnung (2) und der Auslassöffnung (3) mindestens zwei axial beabstandete unterschiedlich ausgebildete Schließorgane (4, 5) vorgesehen und diese abwechselnd nacheinander im Rohrkörper (1) angeordnet sind, wobei jedes Schließorgan (4, 5) zwei schräg in den Rohrkörper (1) ragende Biegeplatten (6) enthält, die in Strömungsrichtung (10) den Durchströmquerschnitt (8) zunehmend verengen, wobei ein radiales Schließorgan (5) zwei Biegeplatten (6) an gegenüberliegenden Innenwänden (13) des Rohrkörpers (1) enthält und ein zentrales Schließorgan (4) zwei im Zentrum (9) des Rohrkörpers (1) angeordnete und v-förmig miteinander verbundene Biegeplatten (6) enthält, wobei die Biegeplatten (6) so elastisch oder plastisch verbiegbar sind, dass diese bei einem Explosionsdruck den Durchströmquerschnitt (8) des Rohrkörpers (1) in Gegenrichtung zur Strömungsrichtung (10) verschließen.

2. Explosionsschutzvorrichtung nach Anspruch 1, **dadurch gekennzeichnet, dass** der Rohrkörper (1) als Vierkantrohr oder Rundrohr ausgebildet ist, der oben durch einen Rohrdeckel (15) und unten durch ein Umlenkblech (22) verschlossen ist, wobei unterhalb des Rohrdeckels (15) in einer Seitenwand die Einlassöffnung (2) und davon axial beabstandet oberhalb des Umlenkbleches (22) in einer gegenüberliegenden Seitenwand die Auslassöffnung (3) angeordnet ist.

3. Explosionsschutzvorrichtung nach Anspruch 1 oder 2, **dadurch gekennzeichnet, dass** im Rohrkörper (1) axial zwischen der Einlassöffnung (2) und der Auslassöffnung (3) mindestens ein zentrales Schließorgan (4) vorgesehen ist, das aus einem längs gerichteten zentralen Befestigungselement (7) und zwei quadratischen oder rechteckigen Biegeplatten (6) besteht, wobei das zentrale Befestigungselement (7) als ein v-förmig abgewinkeltes Blechteil ausgebildet ist, dessen Öffnungswinkel (18) einen spitzen Winkel von 25° bis 35° aufweist, wobei an den gegenüberliegenden Enden des Blechteils mindestens jeweils eine 90° abgewinkelte Befestigungsnase (19) vorgesehen ist, die an gegenüberliegenden Innenwänden (13) des Rohrkörpers (1) befestigt sind.

4. Explosionsschutzvorrichtung nach Anspruch 1 oder 2, **dadurch gekennzeichnet, dass** im Rohrkörper (1) axial zwischen der Einlassöffnung (1) und der Auslassöffnung (3) mindestens ein radiales Schließorgan (5) vorgesehen ist, das aus zwei gegenüberliegenden Schließorganteilen besteht, wobei jedes Schließorganteil ein längs gerichtetes radiales Befestigungselement (17) und eine rechteckige oder quadratische Biegeplatte (6) enthält, und wobei das radiale Befestigungselement (17) als schräg nach innen zum Zentrum (9) abgewinkeltes Blechteil ausgebildet ist, das mit der jeweiligen Innenwand (13) einen Öffnungswinkel (18) von 12,5° bis 17,5° aufweist, wobei an den gegenüberliegenden Enden des abgewinkelten Blechteils jeweils mindestens eine 90° abgewinkelte Befestigungsnase (19) vorgesehen ist, die an gegenüberliegenden Innenwänden (13) des Rohrkörpers (1) befestigt sind.

5. Explosionsschutzvorrichtung nach einem der Ansprüche 1 bis 4, **dadurch gekennzeichnet, dass** die Biegeplatten (6) aus biegeelastischem Stahlblech bestehen, die eine Blechdicke von 0,5 mm bis 1,5 mm aufweisen und dabei so ausgebildet sind, dass sie bei einem Explosionsvorgang sich so weit entgegen der Strömungsrichtung (10) verbiegen, dass der Rohrkörper (1) in diese Richtung geschlossen ist und die Biegeplatten 6 nach Abklingen des Explosionsdrucks wieder in ihre Ausgangslage zurückkehren.

6. Explosionsschutzvorrichtung nach einem der Ansprüche 1 bis 5, **dadurch gekennzeichnet, dass** im Rohrkörper (1) in Strömungsrichtung (10) nach der Einlassöffnung (2) und/oder nach der Auslassöffnung (3) jeweils eine Rückschlagklappe (11, 12) angeordnet ist, die in Strömungsrichtung (10) vom Durchströmdruck öffenbar und im Explosionsfall entgegen der Strömungsrichtung (10) verschließbar ist.

7. Explosionsschutzvorrichtung nach einem der Ansprüche 1 bis 5, **dadurch gekennzeichnet, dass** im Rohrkörper (1) in Strömungsrichtung (10) nach der Einlassöffnung (2) eine mehrteilige Verschlusseinrichtung angeordnet ist, die in Strömungsrichtung (10) vom Durchströmdruck öffenbar und im Explosionsfall entgegen der Strömungsrichtung (10) verschließbar ist.

8. Explosionsschutzvorrichtung nach Anspruch 7, wobei die mehrteilige Verschlusseinrichtung ausgewählt ist aus Metallstreifen, Kettenelementen, Magnetbändern und/oder Kombinationen davon.
